(19) Europäisches Patentamt
European Patent Office
Office européen des brevets

(11) **EP 4 407 003 B1**

(12) **EUROPEAN PATENT SPECIFICATION**

(45) Date of publication and mention of the grant of the patent:
**29.04.2026 Bulletin 2026/18**

(21) Application number: **22872583.4**

(22) Date of filing: **09.08.2022**

(51) International Patent Classification (IPC):
***C08L 69/00*** *(2006.01)* ***C08L 23/30*** *(2006.01)*
***C08L 51/06*** *(2006.01)* ***C08L 53/02*** *(2006.01)*
***C08L 55/02*** *(2006.01)*

(52) Cooperative Patent Classification (CPC):
(C-Sets available)
**C08L 69/00;** C08G 64/06; C08G 64/24;
C08L 2205/035 (Cont.)

(86) International application number:
**PCT/JP2022/030481**

(87) International publication number:
**WO 2023/047827 (30.03.2023 Gazette 2023/13)**

(54) **RESIN COMPOSITION AND MOLDED ARTICLE THEREOF**

HARZZUSAMMENSETZUNG UND FORMARTIKEL DARAUS

COMPOSITION DE RÉSINE ET ARTICLE MOULÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2021 JP 2021155453**

(43) Date of publication of application:
**31.07.2024 Bulletin 2024/31**

(73) Proprietor: **Teijin Limited**
**Osaka-shi, Osaka 530-0005 (JP)**

(72) Inventor: **OONISHI, Yosuke**
**Osaka-shi, Osaka 530-0005 (JP)**

(74) Representative: **Kraus & Lederer PartGmbB**
**Thomas-Wimmer-Ring 15**
**80539 München (DE)**

(56) References cited:
**EP-A1- 0 572 667**
**WO-A1-92/14790**
**CN-A- 102 807 725**
**CN-A- 109 354 852**
**CN-A- 110 028 721**
**DE-A1- 4 300 798**
**JP-A- 2001 220 505**
**JP-A- 2001 220 506**
**JP-A- 2002 167 492**
**JP-A- 2002 194 224**
**JP-A- 2003 137 946**
**JP-A- 2004 203 929**
**JP-A- 2017 014 447**
**JP-A- 2018 141 078**
**JP-A- H10 158 409**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 407 003 B1

(52) Cooperative Patent Classification (CPC): (Cont.)

C-Sets
**C08L 69/00, C08L 55/02, C08L 51/06, C08L 53/02, C08L 91/06**

**Description**

FIELD

The present invention relates to a resin composition and a molded article thereof, and more specifically, relates to a resin composition which has excellent impact resistance, fluidity, heat resistance, chemical resistance, and suitable molded article appearance, and which is highly effective in suppressing noise when molded articles thereof rub against each other, as well as a molded article thereof.

BACKGROUND

Since polycarbonate resins have excellent mechanical and thermal properties, they are used in a variety of applications, mainly in the automobile field, office automation equipment field, and electronic and electrical equipment field. Furthermore, alloy resins, which are a mixture of a polycarbonate resin and an ABS resin or AS resin, are advantageous in terms of excellent fluidity and are used in applications such as automobile parts, printer parts, computer casings, and computer parts. In recent years, in particular, in the automotive field, the use of resin materials as interior materials has increased for the purpose of weight reduction, but parts composed of resin vibrate as the automotive is driven, and the noise generated when the parts rub against each other has become a problem. Thus, studies have been conducted to impart an abnormal noise suppressing effect to resin. Examples of methods for imparting noise suppression effects to resin materials include a method of blending an organosilicon compound into an alloy resin in which an ABS resin is blended with a polycarbonate resin (refer to Patent Literature 1), a method of blending a silicone oil with an ABS resin (refer to Patent Literature 2), and a method of blending a silane-modified polyethylene resin with a polycarbonate resin (refer to Patent Literature 3). However, the effect of suppressing abnormal noise by these methods is insufficient, and there are also problems such as the mechanical properties and appearance of the resin material are impaired due to the blending.

Patent Literature 4 discloses a resin composition containing a resin component composed of polycarbonate resin and ABS; a graft copolymer having a styrene polymer side chain and a main chain which is an ethylene-vinyl acetate copolymer; and a wax.

[CITATION LIST]

[PATENT LITERATURE]

[PTL 1] Japanese Examined Patent Publication (Kokoku) No. 63-56267
[PTL 2] Japanese Patent No. 2798396
[PTL 3] Japanese Unexamined Patent Publication (Kokai) No. 5-247236
[PTL 4] JP 2018 141078 A

SUMMARY

[TECHNICAL PROBLEM]

An object of the present application is to provide a resin composition which has excellent impact resistance, fluidity, heat resistance, chemical resistance, and suitable molded article appearance, and which is highly effective in suppressing noise when molded articles thereof rub against each other, as well as a molded article thereof.

[SOLUTION TO PROBLEM]

As a result of rigorous investigation in order to achieve the above object, the present inventors have discovered that a resin composition which has excellent impact resistance, fluidity, heat resistance, and chemical resistance, has a suitable molded article appearance, and is highly effective in suppressing noise when molded articles thereof rub against each other, as well as a molded article thereof can be obtained by adding a graft copolymer having a side chain which is a copolymer obtained by polymerizing an aromatic vinyl monomer and another vinyl monomer, and having a main chain which is an ethylene-vinyl acetate copolymer, and an isobutylene-based block copolymer obtained by polymerizing a monomer containing isobutylene as a primary component and a monomer not containing isobutylene as a primary component to a component composed of a polycarbonate resin and a copolymer obtained by polymerizing an aromatic

vinyl monomer, a vinyl cyanide monomer, and a diene-based rubber polymer.

Specifically, the present invention is as described below.

[1] A resin composition containing

100 parts by weight of a component composed of (A) 45 to 90 parts by weight of polycarbonate resin (component A) and (B) 10 to 55 parts by weight of a copolymer (component B) obtained by polymerizing an aromatic vinyl monomer, a vinyl cyanide monomer, and a diene-based rubber polymer,
(C) 1 to 10 parts by weight of a graft copolymer (component C) having a side chain which is a copolymer obtained by polymerizing an aromatic vinyl monomer and another vinyl monomer, and having a main chain which is an ethylene-vinyl acetate copolymer, and
(D) 1 to 10 parts by weight of an isobutylene-based block copolymer (component D) obtained by polymerizing a monomer containing isobutylene as a primary component and a monomer not containing isobutylene as a primary component.

[2] The resin composition according to aspect [1], further containing, relative to 100 parts by weight of the component composed of component A and component B, (E) 0.05 to 1.5 parts by weight of an oxidized polyethylene wax (component E).
[3] The resin composition according to aspect [1] or [2], wherein component B is an ABS resin.
[4] The resin composition according to any one of aspects [1] to [3], wherein component D is a styrene-isobutylene-styrene block copolymer.
[5] A molded article composed of the resin composition according to any one of aspects [1] to [4].
[6] The molded article according to aspect [5], wherein the molded article is an automotive part.

[ADVANTAGEOUS EFFECTS OF INVENTION]

Since the resin composition of the present invention has excellent impact resistance, fluidity, heat resistance, and chemical resistance, has a suitable molded article appearance, and is highly effective in suppressing abnormal noise when molded articles thereof rub against each other, it can be suitably used as a component in the automobile field, OA equipment field, home appliances, electric/electronic field, etc., and it is particularly suitable for automotive parts, and the industrial effects thereof are exceptional.

DESCRIPTION OF EMBODIMENTS

The object to be achieved by the present invention described above can be achieved by a resin composition containing 100 parts by weight of a component composed of (A) 45 to 90 parts by weight of polycarbonate resin (component A) and (B) 10 to 55 parts by weight of a copolymer (component B) obtained by polymerizing an aromatic vinyl monomer, a vinyl cyanide monomer, and a diene-based rubber polymer, (C) 1 to 10 parts by weight of a graft copolymer (component C) having a side chain which is a copolymer obtained by polymerizing an aromatic vinyl monomer and another vinyl monomer, and having a main chain which is an ethylene-vinyl acetate copolymer, and (D) 1 to 10 parts by weight of an isobutylene-based block copolymer (component D) obtained by polymerizing a monomer containing isobutylene as a primary component and a monomer not containing isobutylene as a primary component.

The details of each constituent element of the present invention will be described below.

(Component A: Polycarbonate Resin)

The polycarbonate resin used in the present invention is obtained by reacting a dihydric phenol with a carbonate precursor. Examples of reaction methods include interfacial polymerization, melt transesterification, and solid phase transesterification of carbonate prepolymers, and ring-opening polymerization of cyclic carbonate compounds.

Typical examples of dihydric phenols used herein include hydroquinone, resorcinol, 4,4'-biphenol, 1,1-bis(4-hydroxyphenyl)ethane, 2,2-bis(4-hydroxyphenyl)propane (commonly known as bisphenol A), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylene diisopropylidene)diphenol, 4,4'-(m-phenylene diisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis(4-hydroxyphenyl) ester, bis(4-hydroxy-3-methylphenyl)sulfide, 9,9-bis(4-hydroxyphenyl)fluorene, and 9,9-bis(4-hydroxy-3-methylphenyl)fluorene. Bis(4-hydroxyphenyl)alkanes are preferred dihydric phenols, and among them, bisphenol A is particularly preferable from the viewpoint of impact resistance

and is widely used.

In the present invention, in addition to bisphenol A polycarbonates, which are general-purpose polycarbonates, special polycarbonates made with other dihydric phenols as can be used as component A.

For example, as part or all of a dihydric phenol component, a polycarbonate (homopolymer or copolymer) using 4,4'-(m-phenylene diisopropylidene)diphenol (hereinafter sometimes abbreviated as "BPM"), 1,1-bis(4-hydroxyphenyl) cyclohexane, 1,1-bis(4-hydroxyphenyl)-3,3,5-trimethylcyclohexane (hereinafter sometimes abbreviated as "Bis-TMC"), 9,9-bis(4-hydroxyphenyl)fluorene, or 9,9-bis(4-hydroxy-3-methylphenyl)fluorene (hereinafter sometimes abbreviated as "BCF") is suitable for applications where dimensional changes due to water absorption and morphological stability are particularly demanding. It is preferable to use these dihydric phenols other than BPA in an amount of 5 mol% or more, and in particular, 10 mol% or more, relative to the entire dihydric phenol component constituting the polycarbonate.

In particular, when high rigidity and better hydrolysis resistance are required, it is particularly preferable that component A constituting the resin composition be a copolymer polycarbonate of any of the following (1) to (3).

(1) A copolymer polycarbonate in which, in 100 mol% of the dihydric phenol component constituting the polycarbonate, BPM is 20 to 80 mol% (more preferably 40 to 75 mol%, further preferably 45 to 65 mol%), and BCF is 20 to 80 mol% (more preferably 25 to 60 mol%, further preferably 35 to 55 mol%).
(2) A copolymer polycarbonate in which, in 100 mol% of the dihydric phenol component constituting the polycarbonate, BPA is 10 to 95 mol% (more preferably 50 to 90 mol%, further preferably 60 to 85 mol%), and BCF is 5 to 90 mol% (more preferably 10 to 50 mol%, and further preferably 15 to 40 mol%).
(3) A copolymer polycarbonate in which, in 100 mol% of the dihydric phenol component constituting the polycarbonate, BPM is 20 to 80 mol% (more preferably 40 to 75 mol%, further preferably 45 to 65 mol%), and Bis-TMC is 20 to 80 mol% (more preferably 25 to 60 mol%, further preferably 35 to 55 mol%).

These special polycarbonates may be used alone or in an appropriate mixture of two or more thereof. These can also be used in combination with a commonly used bisphenol A polycarbonate.

The production method and characteristics of these special polycarbonates are described in detail in, for example, Japanese Unexamined Patent Publication (Kokai) No. 6-172508, Japanese Unexamined Patent Publication (Kokai) No. 8-27370, Japanese Unexamined Patent Publication (Kokai) No. 2001-55435, and Japanese Unexamined Patent Publication (Kokai) No. 2002-117580.

Furthermore, among the various polycarbonates described above, a polycarbonate in which the copolymer composition has been adjusted such that the water absorption rate and Tg (glass transition temperature) are within the following range is particularly suitable in fields where morphological stability is required, since the polymer itself has suitable hydrolysis resistance and also has significantly low warpage after molding.

(i) A polycarbonate having a water absorption of 0.05 to 0.15%, preferably 0.06 to 0.13%, and a Tg of 120 to 180°C, or
(ii) a polycarbonate having a Tg of 160 to 250 °C, preferably 170 to 230 °C, and a water absorption f 0.10 to 0.30%, preferably 0.13 to 0.30%, and more preferably 0.14 to 0.27%.

The water absorption rate of polycarbonate is the value obtained by measuring the moisture content after immersing a disc-shaped test sample having a diameter of 45 mm and a thickness of 3.0 mm in water at 23 °C for 24 hours in accordance with ISO62-1980. The Tg (glass transition temperature) is a value determined by differential scanning calorimeter (DSC) measurement in accordance with JIS K7121.

Carbonyl halides, diester carbonates, and haloformates are used as carbonate precursors, and specific examples thereof include phosgene, diphenyl carbonate, and dihaloformates of dihydric phenols.

When producing an aromatic polycarbonate resin by interfacial polymerization of the dihydric phenol and carbonate precursor, if necessary, a catalyst, a terminal capping agent, and an antioxidant, for preventing the dihydric phenol from being oxidized, may be used. Further, examples of the aromatic polycarbonate resin of the present invention include branched polycarbonate resins copolymerized with trifunctional or higher polyfunctional aromatic compounds, polyester carbonate resins copolymerized with aromatic or aliphatic (including alicyclic) difunctional carboxylic acids, copolymer polycarbonate resins copolymerized with difunctional alcohol (including alicyclic), and polyester carbonate resins copolymerized with such difunctional carboxylic acid and difunctional alcohol. A mixture of two or more of the obtained aromatic polycarbonate resins may be used.

The branched polycarbonate resin can impart anti-drip performance to the resin composition of the present invention. Examples of trifunctional or higher polyfunctional aromatic compounds which can be used in such a branched polycarbonate resin include phloroglucin, phloroglucide, trisphenols such as 4,6-dimethyl-2,4,6-tris(4-hydroxydiphenyl) heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, and 4-{4-[1,1-bis(4-hydroxyphenyl)ethyl]benzene}-α,α-dimethylbenzylphenol, as well as tetra(4-hydroxyphenyl)methane, bis(2,4-dihydroxyphenyl)ketone, 1,4-bis(4,4-dihydroxytriphenylmethyl)benzene, or trimellitic acid, pyromellitic acid, benzophenonetetracarboxylic acid and acid chlorides thereof, and among these, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable.

In a total 100 mol% of structural units derived from dihydric phenols and structural units derived from such polyfunctional aromatic compounds, the structural units derived from a polyfunctional aromatic compound in the branched polycarbonate are preferably 0.01 to 1 mol%, more preferably 0.05 to 0.9 mol%, and further preferably 0.05 to 0.8 mol%.

In particular, in the case of the melt transesterification method, branched structural units may be produced as a side reaction, and the amount of such branched structural units, in a total of 100 mol% of structural units derived from dihydric phenols, is preferably 0.001 to 1 mol%, more preferably 0.005 to 0.9 mol%, and further preferably 0.01 to 0.8 mol%. It should be noted that the proportion of such a branched structure can be calculated by $^1$H-NMR measurement.

The aliphatic difunctional carboxylic acid is preferably $\alpha,\omega$-dicarboxylic acid. Preferred examples of the aliphatic difunctional carboxylic acid include linear saturated aliphatic dicarboxylic acids such as sebacic acid (decanedioic acid), dodecanedioic acid, tetradecanedioic acid, octadecanedioic acid, and icosanedioic acid, and alicyclic dicarboxylic acids such as cyclohexanedicarboxylic acid are preferable. As the difunctional alcohol, alicyclic diols are more suitable, and examples thereof include cyclohexanedimethanol, cyclohexanediol, and tricyclodecane dimethanol.

The reaction formats of the interfacial polymerization method, melt transesterification method, carbonate prepolymer solid-phase transesterification method, and ring-opening polymerization method of cyclic carbonate compounds, which are the methods for producing the polycarbonate resin of the present invention, are well known from various documents and patent publications.

When producing the resin composition of the present invention, the viscosity average molecular weight (M) of the polycarbonate resin is not particularly limited, and is preferably $1.8 \times 10^4$ to $4.0 \times 10^4$, more preferably $2.0 \times 10^4$ to $3.5 \times 10^4$, and further preferably $2.2 \times 10^4$ to $3.0 \times 10^4$. Polycarbonate resins having a viscosity average molecular weight of less than $1.8 \times 10^4$ may not provide suitable mechanical properties. Conversely, resin compositions obtained from polycarbonate resins having a viscosity average molecular weight exceeding $4.0 \times 10^4$ are inferior in versatility in that fluidity during injection molding is inferior.

It should be noted that the polycarbonate resin may be obtained by mixing resins having viscosity average molecular weights outside the above range. In particular, polycarbonate resins having a viscosity average molecular weight exceeding the above range ($5 \times 10^4$) have improved entropy elasticity. As a result, suitable moldability is exhibited in gas-assisted molding and foam molding, which are sometimes used when molding reinforced resin materials into structural members. This improvement in moldability is even better than that of branched polycarbonates. A more preferred aspect in which component Ais a polycarbonate resin (component A-1) (hereinafter sometimes referred to as "polycarbonate resin containing high molecular weight components") having a viscosity average molecular weight of $1.6 \times 10^4$ to $3.5 \times 10^4$ and composed of a polycarbonate resin (component A-1-1) having a viscosity average molecular weight of $7 \times 10^4$ to $3 \times 10^5$, and an aromatic polycarbonate resin (component A-1-2) having a viscosity average molecular weight of $1 \times 10^4$ to $3 \times 10^4$.

In such a polycarbonate resin containing high molecular weight components (component A-1), the molecular weight of component A-1-1 is preferably $7 \times 10^4$ to $2 \times 10^5$, more preferably $8 \times 10^4$ to $2 \times 10^5$, further preferably $1 \times 10^5$ to $2 \times 10^5$, and particularly preferably $1 \times 10^5$ to $1.6 \times 10^5$. The molecular weight of component A-1-2 is preferably $1 \times 10^4$ to $2.5 \times 10^4$, more preferably $1.1 \times 10^4$ to $2.4 \times 10^4$, further preferably $1.2 \times 10^4$ to $2.4 \times 10^4$, and particularly preferably $1.2 \times 10^4$ to $2.3 \times 10^4$.

Polycarbonate resins containing high molecular weight components (component A-1) can be obtained by mixing component A-1-1 and component A-1-2 described above in various ratios and adjusting the mixture to satisfy a predetermined molecular weight range. Preferably, in 100% by weight of Component A-1, component A-1-1 is 2 to 40% by weight, more preferably component A-1-1 is 3 to 30% by weight, further preferably component A-1-1 is 4 to 20% by weight, and particularly preferably component A-1-1 is 5 to 20% by weight.

Examples of the method for preparing component A-1 include (1) a method of independently polymerizing component A-1-1 and component A-1-2 and mixing them, (2) a production method in which by using a method of producing aromatic polycarbonate resins which exhibit multiple polymer peaks in a molecular weight distribution chart determined by GPC method in the same system, such aromatic polycarbonate resins satisfy the conditions of component A-1 of the present invention, as exemplified by the method shown in Japanese Unexamined Patent Publication (Kokai) No. 5-306336, and (3) a method of mixing the aromatic polycarbonate resin obtained by this manufacturing method (the manufacturing method of (2)) with separately manufactured component A-1-1 and/or component A-1-2.

For the viscosity average molecular weight in the present invention, first the specific viscosity ($\eta_{SP}$) calculated using the following formula is obtained from a solution of 0.7 g of polycarbonate dissolved in 100 ml of methylene chloride at 20 °C using an Ostwald viscometer:

$$\text{Specific viscosity } (\eta_{SP}) = (t - t_0) / t_0$$

where $t_0$ is the number of seconds that methylene chloride falls and t is the number of seconds that the sample solution falls.

The viscosity average molecular weight M is calculated from the determined specific viscosity ($\eta_{SP}$) using the following formula:

$$\eta_{SP} / c = [\eta] + 0.45 \times [\eta]^2 c$$

(wherein, [η] is the limiting viscosity)

$$[\eta] = 1.23 \times 10^{-4} M^{0.83}$$

c = 0.7

It should be noted that the viscosity average molecular weight of the polycarbonate resin in the resin composition of the present invention is calculated in the following manner. Specifically, the composition is mixed with 20 to 30 times its weight of methylene chloride to dissolve the soluble content in the composition. The soluble content is collected by filtration through Celite. The solvent in the resulting solution is then removed. After removing the solvent, the solid is thoroughly dried to obtain a component solid that is soluble in methylene chloride. The specific viscosity at 20 °C is determined from a solution of 0.7 g of the solid dissolved in 100 ml of methylene chloride in the same manner as above, and the viscosity average molecular weight M is calculated from the specific viscosity in the same manner as above.

Polycarbonate-polydiorganosiloxane copolymer resin can also be used as the polycarbonate resin (Component A) of the present invention. It is preferable that the polycarbonate-polydiorganosiloxane copolymer resin be a copolymer resin prepared by copolymerizing a dihydric phenol represented by the following general formula (1) and a hydroxyaryl-terminated polydiorganosiloxane represented by the following general formula (3).

[Chem 1]

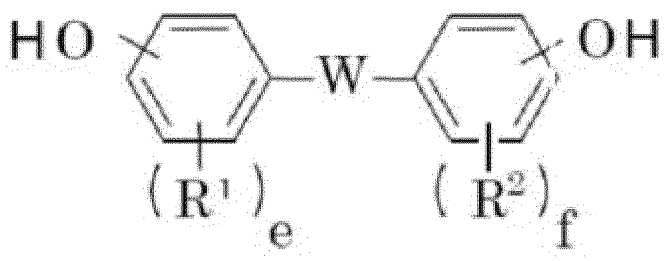

··· (1)

where $R^1$ and $R^2$ each independently represent a hydrogen atom, a halogen atom, or a group selected from the group consisting of an alkyl group having 1 to 18 carbon atoms, an alkoxy group having 1 to 18 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 14 carbon atoms, an aralkyl group having 7 to 20 carbon atoms, an aralkyloxy group having 7 to 20 carbon atoms, a nitro group, an aldehyde group, a cyano group, and a carboxyl group, and when there are a plurality of groups, they may be the same or may be different, e and f are each an integer of 1 to 4, and W is a single bond or at least one group selected from the group consisting of groups represented by the following general formula (2).

[Chem 2]

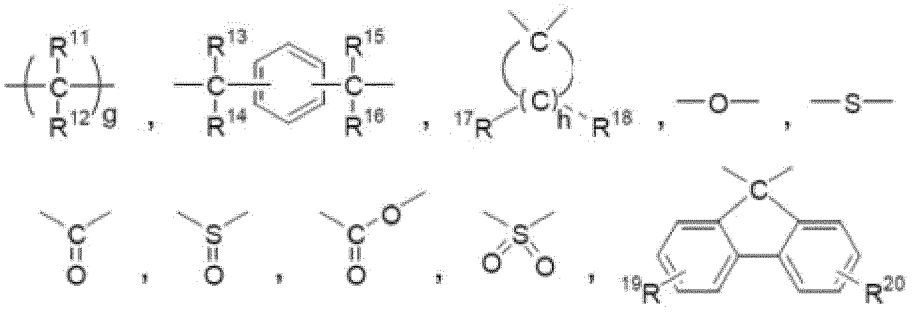

··· (2)

where $R^{11}$, $R^{12}$ $R^{13}$, $R^{14}$, $R^{15}$, $R^{16}$ $R^{17}$, and $R^{18}$ each independently represent a hydrogen atom, or a group selected from the group consisting of an alkyl group having 1 to 18 carbon atoms, an aryl group having 6 to 14 atoms, and an aralkyl group having 7 to 20 carbon atoms, $R^{19}$ and $R^{20}$ each independently represent a hydrogen atom, a halogen atom, or a group selected from the group consisting of an alkyl group having 1 to 18 carbon atoms, an alkoxy group having 1 to 10 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 10 carbon atoms, an aralkyl group having 7 to 20 carbon atoms, an aralkyloxy group having 7 to 20 carbon atoms, a nitro group, an aldehyde group, a cyano group, and a carboxyl group, and when there are a plurality of groups, they may be the same or different, g is an integer from 1 to 10, and h is an integer from 4 to 7.

[Chem 3]

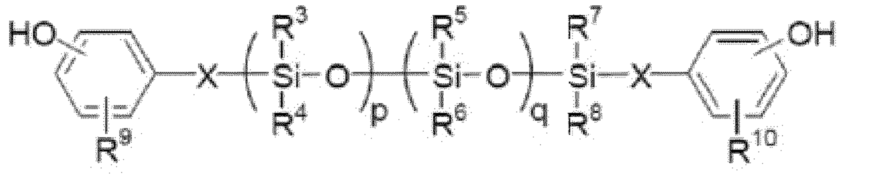

··· (3)

where $R^3$, $R^4$, $R^5$, $R^6$, $R^7$, and $R^8$ are each independently a hydrogen atom, an alkyl group having 1 to 12 carbon atoms, or a substituted or unsubstituted aryl group having 6 to 12 carbon atoms, $R^9$ and $R^{10}$ are each independently a hydrogen atom, a halogen atom, an alkyl group having 1 to 10 carbon atoms, or an alkoxy group having 1 to 10 carbon atoms, p is a natural number, q is 0 or a natural number, and p + q is a natural number from 10 to 300. X is a divalent aliphatic group having 2 to 8 carbon atoms.

Examples of the dihydric phenol (I) represented by general formula (1) include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl) propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyldiphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, and 4,4'-(1,3-adamantanediyl)diphenol, 1,3-bis(4-hydroxyphenyl)-5,7-dimethyladamantane.

Among these, 1,1-bis(4-hydroxyphenyl)-1-phenylethane, 2,2-bis(4-hydroxyphenyl)propane, 2,2-bis(4-hydroxy-3-methylphenyl)propane, 1,1 -bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene, and 1,4-bis{2-(4-hydroxyphenyl)propyl}benzene are preferable, and in particular, 2,2-bis(4-hydroxyphenyl)propane, 1,1-bis(4-hydroxyphenyl)cyclohexane (BPZ), 4,4'-sulfonyldiphenol, and 9,9-bis(4-hydroxy-3-methylphenyl)fluorene are preferable. Among these, 2,2-bis(4-hydroxyphenyl)propane, which has excellent

strength and suitable durability, is most preferable. Further, these may be used alone or in combination of two or more.

As the hydroxyaryl-terminated polydiorganosiloxane represented by the above general formula (3), for example, the compounds shown below are preferably used.

[Chem 4]

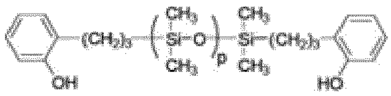
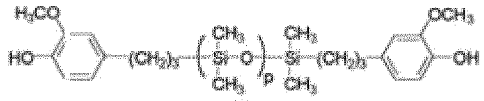
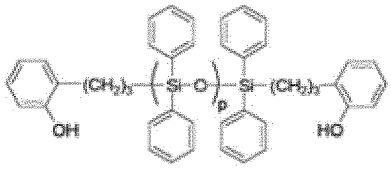
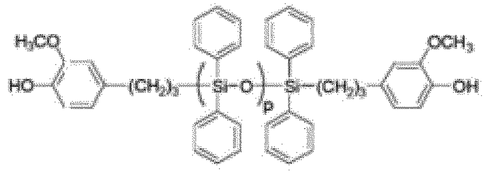
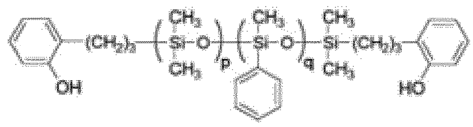
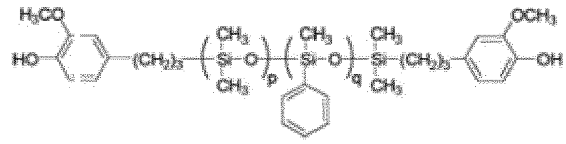
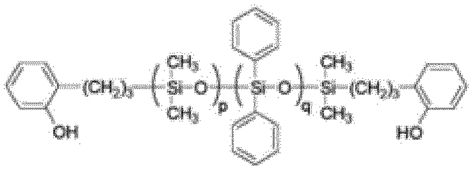
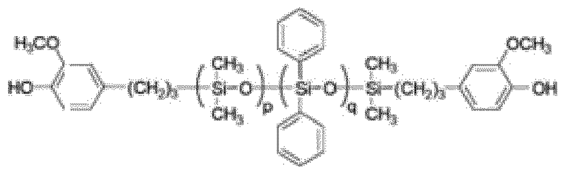

The hydroxyaryl-terminated polydiorganosiloxane (II) can easily be produced by carrying out a hydrosilylation reaction with a phenol having an olefinic unsaturated carbon-carbon bond, and preferably vinylphenol, 2-allylphenol, isopropenylphenol, or 2-methoxy-4-allylphenol, at the end of a polysiloxane chain having a predetermined degree of polymerization. Among these, (2-allylphenol)-terminated polydiorganosiloxane and (2-methoxy-4-allylphenol)-terminated polydiorganosiloxane are preferable, and in particular, (2-allylphenol)-terminated polydimethylsiloxane and (2-methoxy-4-allylphenol)-terminated polydiorganosiloxane are preferable. The hydroxyaryl-terminated polydiorganosiloxane (II) preferably has a molecular weight distribution (Mw /Mn) of 3 or less. In order to further exhibit excellent low outgassing properties during high temperature molding and low temperature impact properties, the molecular weight distribution (Mw/Mn) is more preferably 2.5 or less, and further preferably 2 or less. If the upper limit of this preferred range is exceeded, a large amount of outgas will be generated during high-temperature molding, whereby the low-temperature impact properties may be poor.

Further, in order to realize a high degree of impact resistance, the degree of diorganosiloxane polymerization (p + q) of the hydroxyaryl-terminated polydiorganosiloxane (II) is suitably 10 to 300. The diorganosiloxane polymerization degree (p + q) is preferably 10 to 200, more preferably 12 to 150, and further preferably 14 to 100. Below the lower limit of this preferable range, the impact resistance, which is a characteristic of the polycarbonate-polydiorganosiloxane copolymer, is not effectively expressed, and when the upper limit of this preferred range is exceeded, poor appearance occurs.

The polydiorganosiloxane content based on the total weight of the polycarbonate-polydiorganosiloxane copolymer resin used in component A is preferably 0.1 to 50% by weight. Such polydiorganosiloxane component content is more preferably 0.5 to 30% by weight, and further preferably 1 to 20% by weight. If it is greater than or equal to the lower limit of this preferred range, the impact resistance and flame retardancy are excellent, and if it is less than or equal to the upper limit of this preferred range, a stable appearance which is not easily impacted by molding conditions can easily be obtained. The polydiorganosiloxane polymerization degree and polydiorganosiloxane content can be calculated by $^1$H-NMR measurement.

In the present invention, only one type of hydroxyaryl-terminated polydiorganosiloxane (II) may be used, or two or more types may be used.

Other comonomers other than the dihydric phenol (I) and hydroxyaryl-terminated polydiorganosiloxane (II) may be used together in an amount of 10% by weight or less based on the total weight of the copolymer, as long as they do not interfere with the present invention.

In the present invention, a mixed solution containing an oligomer having a terminal chloroformate group is prepared in advance by reacting dihydric phenol (I) with a carbonate-forming compound in a mixed solution of a water-insoluble organic solvent and an alkaline aqueous solution.

When producing an oligomer of dihydric phenol (I), the entirety of dihydric phenol (I) used in the method of the present invention may be formed into an oligomer at once, or a part thereof may be added as a post-addition monomer to the subsequent interfacial polycondensation reaction as a reaction raw material. The post-addition monomer is added to speed up the subsequent polycondensation reaction, and there is no need to intentionally add it if it is not necessary.

This oligomer production reaction method is not particularly limited, but it is usually preferable to carry out the reaction in a solvent in the presence of an acid binder.

The proportion of the carbonate ester-forming compound to be used may be appropriately adjusted in consideration of the stoichiometric ratio (equivalent) of the reaction. When using a gaseous carbonate ester-forming compound such as phosgene, a method of blowing it into the reaction system can be suitably employed.

As the acid binder, for example, alkali metal hydroxides such as sodium hydroxide and potassium hydroxide, alkali metal carbonates such as sodium carbonate and potassium carbonate, organic bases such as pyridine, or mixtures thereof can be used. In the manner described above, the proportion of the acid binder to be used may be appropriately determined in consideration of the stoichiometric ratio (equivalent) of the reaction. Specifically, it is preferable to use the acid binder in an amount of 2 equivalents or slightly in excess of the number of moles of dihydric phenol (I) used to form the oligomer (generally 1 mole corresponds to 2 equivalents).

As the solvent, a solvents which is inert to various reactions, such as those used in the production of known polycarbonates, may be used alone or as a mixed solvent. Typical examples thereof include hydrocarbon solvents such as xylene, halogenated hydrocarbon solvents such as methylene chloride, and chlorobenzene. In particular, halogenated hydrocarbon solvents such as methylene chloride are preferably used.

The reaction pressure for oligomer production is not particularly limited and may be at normal pressure, increased pressure, or reduced pressure, but it is usually advantageous to carry out the reaction under normal pressure. The reaction temperature is selected from the range of -20 to 50 °C. Since heat is generated during polymerization in many cases, cooling with water or ice is preferable. Although the reaction time depends on other conditions and cannot be absolutely defined, the reaction is conventionally carried out for 0.2 to 10 hours. The pH range of the oligomer production reaction is similar to known interfacial reaction conditions, and the pH is always adjusted to 10 or higher.

In this manner, in the present invention, a polycarbonate-polydiorganosiloxane copolymer is obtained by obtaining a mixed solution containing an oligomer of dihydric phenol (I) having a terminal chloroformate group, adding, while stirring the mixed solution, a hydroxyaryl-terminated polydiorganosiloxane (II) represented by general formula (3), which has been highly purified to a molecular weight distribution (Mw/Mn) of 3 or less, to the dihydric phenol (I), and thereafter carrying out interfacial polycondensation of the hydroxyaryl -terminated polydiorganosiloxane (II) and the oligomer.

[Chem 5]

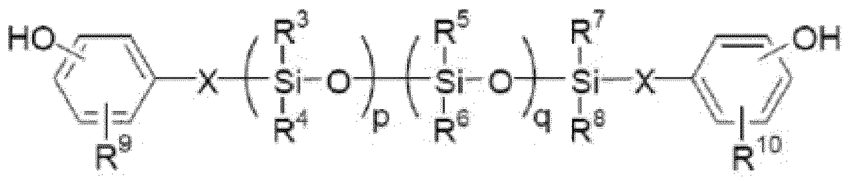

· · · (3)

where $R^3$, $R^4$, $R^5$, $R^6$, $R^7$ and $R^8$ are each independently a hydrogen atom, an alkyl group having 1 to 12 carbon atoms, or a substituted unsubstituted aryl group having 6 to 12 carbon atoms, $R^9$ and $R^{10}$ are each independently a hydrogen atom, a halogen atom, an alkyl group having 1 to 10 carbon atoms, or an alkoxy group having 1 to 10 carbon atoms, p is a natural number, q is 0 or a natural number, and p + q is a natural number from 10 to 300. X is a divalent aliphatic group having 2 to 8 carbon atoms.

When carrying out the interfacial polycondensation reaction, an acid binder may be added as appropriate in consideration of the stoichiometric ratio (equivalent) of the reaction. As the acid binder, for example, alkali metal hydroxides such as sodium hydroxide and potassium hydroxide, alkali metal carbonates such as sodium carbonate and potassium carbonate, organic bases such as pyridine, or mixtures thereof can be used. Specifically, when the hydroxyaryl-terminated polydiorganosiloxane (II) used or a portion of the dihydric phenol (I) as described above is added to this reaction step as a post-added monomer, the alkali is preferably used in an amount of 2 equivalents or in excess of the total number of moles of the post-added dihydric phenol (I) and hydroxyaryl-terminated polydiorganosiloxane (II) (usually 1 mole corresponds to 2 equivalents).

The polycondensation by interfacial polycondensation reaction between the oligomer of dihydric phenol (I) and the hydroxyaryl-terminated polydiorganosiloxane (II) is carried out by vigorously stirring the mixture.

In such polymerization reactions, terminal capping agents or molecular weight regulators are conventionally used. Examples of terminal capping agents include compounds having a monovalent phenolic hydroxyl group, and in

addition to conventional phenol, p-tert-butylphenol, p-cumylphenol, tribromophenol, long chain alkyl phenols, aliphatic carboxylic acid chlorides, aliphatic carboxylic acids, hydroxybenzoic acid alkyl esters, hydroxyphenylalkyl esters, and alkyl ether phenols can be exemplified. The amount used is in the range of 100 to 0.5 mol, preferably 50 to 2 mol, relative to 100 mol of all the dihydric phenol compounds used, and it is naturally possible to use two or more types of compounds together.

Catalysts such as tertiary amines such as triethylamine or quaternary ammonium salts may be added to accelerate the polycondensation reaction.

The reaction time of such polymerization reaction is preferably 30 minutes or more, and more preferably 50 minutes or more. If desired, a small amount of an antioxidant such as sodium sulfite or hydrosulfide may be added.

A branching agent can be used in combination with the dihydric phenol compound described above to form a branched polycarbonate-polydiorganosiloxane. Examples of trifunctional or higher-functionality aromatic compounds used in such branched polycarbonate-polydiorganosiloxane copolymer resin includephloroglucin and phloroglucide, as well as 4,6-dimethyl-2,4,6-tris(4-hydroxydiphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane , trisphenols such as 2,6-bis(2-hydroxy-5-methylbenzyl)-4-methylphenol and 4-{4-[1,1-bis(4-hydroxyphenyl)ethyl]benzene}-$\alpha$,$\alpha$-dimethylbenzylphenol, tetra(4-hydroxyphenyl)methane, bis(2,4-dihydroxyphenyl)ketone, and 1,4-bis(4,4-dihydroxytriphenylmethyl)benzene, as well as trimellitic acid, pyromellitic acid, benzophenonetetracarboxylic acid, and acid chlorides thereof. Among these, 1,1,1-tris(4-hydroxyphenyl)ethane and 1,1,1-tris(3,5-dimethyl-4-hydroxyphenyl)ethane are preferable, and in particular, 1,1,1-tris(4-hydroxyphenyl)ethane is preferable. The proportion of polyfunctional compounds in the branched polycarbonate-polydiorganosiloxane copolymer resin is preferably 0.001 to 1 mol%, more preferably 0.005 to 0.9 mol%, further preferably 0.01 to 0.8 mol%, and particularly preferably 0.05 to 0.4 mol%. It should be noted that the amount of branched structure can be calculated by $^1$H-NMR measurement.

The reaction pressure can be any of reduced pressure, normal pressure, and increased pressure, but the reaction can conventionally be suitably carried out at normal pressure or approximately the pressure of the reaction system. The reaction temperature is selected from the range of -20 to 50 °C. Since heat is generated during polymerization in many cases, cooling with water or ice is preferable. Although the reaction time varies, depending on other conditions such as reaction temperature and cannot be absolutely defined, the reaction is conventionally carried out for 0.5 to 10 hours.

In some cases, the obtained polycarbonate-polydiorganosiloxane copolymer resin is subjected to appropriate physical treatment (mixing, fractionation, etc.) and/or chemical treatment (polymer reaction, crosslinking treatment, partial decomposition treatment, etc.), whereby a polycarbonate-polydiorganosiloxane copolymer resin having a desired reduced viscosity [$\eta_{SP}$/c] can be obtained.

The obtained reaction product (crude product) can be subjected to various post-treatments such as known separation and purification methods, and can be recovered as a polycarbonate-polydiorganosiloxane copolymer resin with a desired purity (purification degree).

The average size of the polydiorganosiloxane domains in the polycarbonate-polydiorganosiloxane copolymer resin molded article is preferably in the range of 1 to 60 nm. Such average size is more preferably 3 to 55 nm, further preferably 5 to 50 nm. If it is less than the lower limit of this preferred range, impact resistance and flame retardancy may not be sufficiently exhibited, and if it exceeds the upper limit of this preferred range, impact resistance may not be stably exhibited. As a result, a resin composition with excellent impact resistance and appearance can be provided.

(Component B: Copolymer Obtained by Polymerizing Aromatic Vinyl Monomer, Vinyl Cyanide Monomer, and Diene-Based Rubber Polymer)

Component B of the present invention is a copolymer obtained by polymerizing an aromatic vinyl monomer, a vinyl cyanide monomer, and a diene-based rubber polymer. Component B is preferably composed of 40 to 80% by weight of aromatic vinyl monomer, 10 to 30% by weight of vinyl cyanide monomer, 10 to 50% by weight of diene-based rubber polymer, and 0 to 30% by weight of other monomers.

Examples of the aromatic vinyl monomer include styrene, $\alpha$-methyl styrene, o-methyl styrene, p-methyl styrene, vinyl xylene, ethyl styrene, dimethyl styrene, p-tert-butyl styrene, vinylnaphthalene, methoxy styrene, monobrome styrene, dibrome styrene, fluoro styrene, tribrome styrene, and styrene is particularly preferable.

The proportion of the aromatic vinyl monomer in Component B is preferably 45% by weight, further preferably 50% by weight, and particularly preferably 55% by weight in 100% by weight of Component B, and the upper limit is more preferably 75% by weight, further preferably 70% by weight, and particularly preferably 65 % by weight.

Examples of the vinyl cyanide monomer include acrylonitrile and methacrylonitrile, and acrylonitrile is particularly preferable.

The proportion of vinyl cyanide monomer in Component B is preferably 12% by weight, further preferably 14% by weight, and particularly preferably 15% by weight in 100% by weight of Component B, and the upper limit is more preferably

28% by weight, further preferably 26% by weight, and particularly preferably 25% by weight.

As the diene-based rubber polymer, rubber components such as polybutadiene, polyisoprene, styrene butadiene copolymer are used, and the proportion of the diene-based rubber polymer in Component B is preferably 13% by weight, further preferably 14% by weight, and particularly preferably 15% by weight in 100% by weight of Component B, and the upper limit is more preferably 45% by weight.

Furthermore, it may be co-polymerized with another monomers which can be co-polymerized with these, and in this case, examples of other vinyl monomers which can be co-polymerized include maleimide monomers such as maleimide, N-methylmaleimide, N-cyclohexylmaleimide, and N-phenylmaleimide, acrylamide monomers such as acrylamide and N-methylacrylamide, unsaturated acid anhydrides such as maleic anhydride and itaconic anhydride, unsaturated acids such as acrylic acid and methacrylic acid, as well as glycidyl acrylate, glycidyl methacrylate, 2-hydroxyethyl acrylate, 2-hydroxyethyl methacrylate, and methoxypolyethylene glycol methacrylate.

The upper limit of the proportion of other monomers in Component B is more preferably 20% by weight, and further preferably 10% by weight in 100% by weight of Component B.

As specific examples of Component B, acrylonitrile-butadiene-styrene copolymers, acrylonitrile-butadiene-styrene $\alpha$-methyl styrene copolymers, and acrylonitrile-butadiene-styrene N-phenylmaleimide copolymers are preferable, and among these, acrylonitrile-butadiene-styrene copolymers are preferable. These copolymers may be used alone or in combination of two or more thereof.

Component B may be produced by any of the following polymerization methods: bulk polymerization, solution polymerization, suspension polymerization, and emulsion polymerization, and the copolymerization method may be single-stage grafting or multi-stage grafting. Alternatively, Component B may be a mixture with a copolymer containing only the graft components produced as a by-product.

The content of Component B is 10 to 55 parts by weight, preferably 15 to 45 parts by weight, and more preferably 20 to 35 parts by weight in 100 parts by weight of the component consisting of Component A and Component B. When the content of Component B is less than 10 parts by weight, sufficient fluidity cannot be obtained, and when it exceeds 55 parts by weight, impact resistance and heat resistance are reduced.

(Component C: Graft Copolymer Having Side Chain Which Is Copolymer Obtained by Polymerizing Aromatic Vinyl Monomer and Another Vinyl Monomer, and Main Chain Which Is Ethylene-Vinyl Acetate Copolymer)

Component C of the present invention is a graft copolymer having a side chain which is a copolymer obtained by polymerizing an aromatic vinyl monomer and another vinyl monomer, and a main chain which is an ethylene-vinyl acetate copolymer.

The proportion of vinyl acetate units in the ethylene-vinyl acetate copolymer, which is the main chain, is preferably 1 to 20% by weight, and more preferably 3 to 10% by weight, in 100% by weight of the ethylene-vinyl acetate copolymer.

Examples of the aromatic vinyl monomer used for the side chain include styrene, $\alpha$-methyl styrene, o-methyl styrene, p-methyl styrene, vinyl xylene, ethyl styrene, dimethyl styrene, p-tert-butyl styrene, vinylnaphthalene, methoxy styrene, monobrome styrene, dibrome styrene, fluoro styrene, and tribrome styrene, and styrene is particularly preferable.

Other vinyl monomers used in the side chain include vinyl cyanide monomers, glycidyl esters of acrylic acid or methacrylic acid, and alkyl esters of acrylic acid or methacrylic acid. Examples of vinyl cyanide monomers include acrylonitrile and methacrylonitrile, and acrylonitrile is particularly preferable. Examples of glycidyl esters of acrylic acid or methacrylic acid include acrylic acid glycidyl ester and methacrylic acid glycidyl ester, and methacrylic acid glycidyl ester is preferable. As the alkyl ester of acrylic acid or methacrylic acid, an alkyl ester having 1 to 8 carbon atoms is preferably, and examples thereof include methyl acrylate, n-butyl acrylate, isobutyl acrylate, t-butyl acrylate, 2-ethylhexyl acrylate, methyl methacrylate, ethyl methacrylate, n-butyl methacrylate, and isobutyl methacrylate.

Among the other vinyl monomers mentioned above, glycidyl esters of acrylic acid or methacrylic acid and vinyl cyanide monomers are preferable, glycidyl esters of acrylic acid or methacrylic acid are more preferable, and glycidyl methacrylate esters are particularly preferable.

The content of aromatic vinyl monomer is preferably 50 to 100 parts by weight in a total of 100 parts by weight of the aromatic vinyl monomer and other vinyl monomers.

The content of the side chain is preferably 10 to 50 parts by weight relative to 100 parts by weight of the ethylene-vinyl acetate copolymer, which is the main chain.

Component C can be produced by various known methods. Examples of suitable methods include a method in which is it produced by mixing an aromatic vinyl monomer, other vinyl monomers, and a radical polymerizing organic peroxide into an aqueous suspension of ethylene-vinyl acetate copolymer with a suspending agent, heating and stirring the mixture, impregnating the ethylene-vinyl acetate copolymer with the above components, and then the temperature is further raised to polymerize.

Component C is commercially available, and can be selected and obtained from, for example, the "Modiper" series manufactured by NOF Corporation.

The content of component C is 1 to 10 parts by weight, preferably 2 to 8 parts by weight, and more preferably 2 to 6 parts by weight, relative to 100 parts by weight of the component composed of component A and component B. When the content of component C is less than 1 part by weight, sufficient effects of improving chemical resistance and suppressing noise cannot be obtained, and when it exceeds 10 parts by weight, impact resistance decreases and molded article appearance also deteriorates.

(Component D: Isobutylene-Based Block Copolymer Obtained by Polymerizing Monomer Containing Isobutylene as Primary Component and Monomer Not Containing Isobutylene as Primary Component)

Component D of the present invention is an isobutylene-based block copolymer obtained by polymerizing a monomer containing isobutylene as a primary component and a monomer not containing isobutylene as a primary component, and it is not particularly limited as long as it has a unit consisting of a monomer containing isobutylene as a primary component and a unit consisting of a monomer not containing isobutylene as a primary component. For example, block copolymers, di-block copolymers, tri-block copolymers, and multi-block copolymers having linear, branched, or star-like structures can be selected. It should be noted that if a block copolymer other than the above is used as component D, a sufficient effect of improving chemical resistance and suppressing abnormal noise cannot be obtained. Examples of preferable block copolymers include, from the viewpoint of physical property balance and softener absorption capacity, a tri-block copolymer composed of a unit composed of a monomer component not containing isobutylene as a primary component - a unit composed of a monomer component containing isobutylene as a primary component - a unit composed of a monomer component not containing isobutylene as a primary component, a di-block copolymer composed of a unit composed of a monomer component not containing isobutylene as a primary component - a unit composed of a monomer component containing isobutylene as a primary component, and a star-shaped block copolymer with three or more arms composed of a unit composed of a monomer component not containing isobutylene as a primary component and a unit composed of a monomer component containing isobutylene as a primary component. These can be used alone or in combination of two or more in order to obtain desired physical properties and moldability.

Monomers not containing isobutylene as a primary component are monomer having an isobutylene of 30% by weight or less.

The monomer other than isobutylene in the monomer component not containing isobutylene as a primary component of the present invention is not particularly limited as long as it is a monomer component which can be cationically polymerized, and examples thereof include monomers such as aliphatic olefins, aromatic vinyls, dienes, vinyl ethers, silanes, vinyl carbazole, β-pinene, and acenaphthylene. These may be used alone or in combination.

Examples of aliphatic olefin monomers include ethylene, propylene, 1-butene, 2-methyl-1-butene, 3-methyl-1-butene, pentene, hexene, cyclohexene, 4-methyl-1-pentene, vinylcyclohexane, octene, and norbornene.

Examples of aromatic vinyl monomers include styrene, o-, m- or p-methyl styrene, α-methyl styrene, β-methyl styrene, 2,6-dimethyl styrene, 2,4-dimethyl styrene, α-methyl-o-methyl styrene, α-methyl-m-methyl styrene, α-methyl-p-methyl styrene, β-methyl-o-methyl styrene, β-methyl-m-methyl styrene, β-methyl-p-methyl styrene, 2,4,6-trimethyl styrene, α-methyl-2,6-dimethyl styrene, α-methyl-2,4-dimethyl styrene, β-methyl-2,6-dimethyl styrene, β-methyl-2,4-dimethyl styrene, o-, m- or p-chloro styrene, 2,6-dichloro styrene, 2,4-dichloro styrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-, m- or pt-butyl styrene, o-, m- or p-methoxy styrene, o-, m- or p-chloromethyl styrene, o-, m- or p-bromomethyl styrene, styrene derivatives substituted with silyl groups, indenes, and vinylnaphthalenes.

Examples of diene monomers include butadiene, isoprene, hexadiene, cyclopentadiene, cyclohexadiene, dicyclopentadiene, divinylbenzene, and ethylidene norbornene.

Examples of vinyl ether monomers include methyl vinyl ether, ethyl vinyl ether, (n-, iso)propyl vinyl ether, (n-, sec-, tert-, iso) butyl vinyl ether, methyl propenyl ether, and ethyl propenyl ether.

Examples of silane compounds include vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, γ-methacryloyloxypropyltrimethoxysilane, and γ-methacryloyloxypropylmethyldimethoxysilane.

The monomer component not containing isobutylene as a primary component of the present invention is preferably a monomer component containing an aromatic vinyl monomer as a primary component from the viewpoint of the balance of physical properties and polymerization properties. The aromatic vinyl monomer of the present invention refers to a monomer component in which the aromatic vinyl monomer content is 60% by weight or more, and preferably 80% by weight or more. As the aromatic vinyl monomer, it is preferable to use one or more monomers selected from the group consisting of styrene, α-methyl styrene, p-methyl styrene, and indenes, and from the viewpoint of cost, the use of styrene is particularly preferable.

Furthermore, the monomer containing isobutylene as a primary component may contain monomers other than isobutylene, and is a monomer having an isobutylene content exceeding 30% by weight. The monomer other than isobutylene is not particularly limited as long as it can be cationically polymerized, and examples thereof include the monomers listed above.

The ratio of units composed of monomers containing isobutylene as a primary component and units composed of monomers not containing isobutylene as a primary component is not particularly limited, but from the viewpoint of various physical properties, it is preferable that the units composed of a monomer containing isobutylene as a primary component be 95 to 40% by weight, and the units composed of a monomer not containing isobutylene as a primary component be 5 to 60% by weight, and it is more preferable that units composed of a monomer containing isobutylene as a primary component be 85 to 50% by weight, and units composed of a monomer not containing isobutylene as a primary component be 15 to 50% by weight.

The number average molecular weight of component D is not particularly limited, but from the viewpoint of fluidity, processability, and physical properties, it is preferably 30,000 to 500,000, and more preferably 50,000 to 400,000. If the number average molecular weight of component D is less than the above range, the softener tends to bleed out and the mechanical properties may not be fully expressed, and conversely, if it exceeds the above range, it may be disadvantageous in terms of fluidity and processability.

The method for producing component D is not particularly limited, and for example, it can be obtained by polymerizing a monomer containing isobutylene as a primary component and a monomer not containing isobutylene as a primary component in the presence of a compound represented by the following general formula (4).

[Chem 6] $(CR^1R^2X)_nR^3 \cdots (4)$

where X is a substituent selected from a halogen atom, an alkoxy group having 1 to 6 carbon atoms, and an acyloxy group, $R^1$ and $R^2$ are each a hydrogen atom or a monovalent hydrocarbon group having 1 to 6 carbon atoms, and may be the same or different, $R^3$ is a polyvalent aromatic hydrocarbon group or a polyvalent aliphatic hydrocarbon group, and n represents a natural number from 1 to 6.

The compound represented by general formula (4) above serves as an initiator, and is believed to generate carbon cations in the presence of a Lewis acid, and serves as a starting point for cationic polymerization. Examples of the compound of general formula (4) used in the present invention include (1-chloro-1-methylethyl)benzene $[C_6H_5C(CH_3)_2Cl]$, 1,4-bis(1-chloro-1-methylethyl)benzene $[1,4\text{-}Cl(CH_3)_2CC_6H_4C(CH_3)_2Cl]$, 1,3-bis(1-chloro-1-methylethyl)benzene $[1,3\text{-}Cl(CH_3)_2CC_6H_4C(CH_3)_2Cl]$, 1,3,5-tris(1-chloro-1-methylethyl)benzene $[1,3,5\text{-}(ClC(CH_3)_2)_3C_6H_3]$, and 1,3-bis(1-chloro-1-methylethyl)-5-(tert-butyl)benzene $[1,3\text{-}(C(CH_3)_2Cl)_2\text{-}5\text{-}(C(CH_3)_3)C_6H_3]$.

Among these, the most preferred are bis(1-chloro-1-methylethyl)benzene $[C_6H_4(C(CH_3)_2Cl)_2]$ and tris(1-chloro-1-methylethyl)benzene $[(ClC(CH_3)_2)_3C_6H_3]$. It should be noted that bis(1-chloro-1-methylethyl)benzene is also referred to as bis($\alpha$-chloroisopropyl)benzene, bis(2-chloro-2-propyl)benzene, or dicumyl chloride, and tris(1-chloro-1-methylethyl)benzene is also referred to as tris($\alpha$-chloroisopropyl)benzene, tris(2-chloro-2-propyl)benzene, or tricumyl chloride.

When producing component D by polymerization, a Lewis acid catalyst can also be present. Such Lewis acid may be one which can be used for cationic polymerization, and metal halides such as $TiCl_4$, $TiBr_4$, $BCl_3$, $BF_3$, $BF_3 \cdot OEt_2$, $SnCl_4$, $SbCl_5$, $SbF_5$, $WCl_6$, $TaCl_5$, $VCl_5$, $FeCl_3$, $ZnBr_2$, $AlCl_3$, and $AlBr_3$, and organometallic halides such as $Et_2AlCl$, $EtAlCl_2$ can be suitably used. Among these, $TiCl_4$, $BCl_3$, and $SnCl_4$ are preferable in terms of their ability as catalysts and ease of industrial availability. The amount of Lewis acid used is not particularly limited, and can be set in consideration of the polymerization characteristics or polymerization concentration of the monomer used. Conventionally, it can be used in an amount of 0.1 to 100 molar equivalents, and preferably in a range of 1 to 50 molar equivalents, relative to the compound represented by general formula (4).

When polymerizing component D, an electron donor component can also be present as needed. This electron donor component is believed to have the effect of stabilizing the growing carbon cations during cationic polymerization, and the addition of the electron donor produces a polymerized form with a controlled narrow molecular weight distribution structure. Usable electron donor components include, but are not particularly limited to, pyridines, amines, amides, sulfoxides, esters, and metal compounds having an oxygen atom bonded to a metal atom.

Polymerization of component D can be carried out in an organic solvent if necessary, and the organic solvent can be used without any particular restrictions as long as it does not essentially inhibit cationic polymerization. Specific examples thereof include halogenated hydrocarbons such as methyl chloride, dichloromethane, chloroform, ethyl chloride, dichloroethane, n-propyl chloride, n-butyl chloride, and chlorobenzene; alkylbenzenes such as benzene, toluene, xylene, ethylbenzene, propylbenzene, and butylbenzene; straight chain aliphatic hydrocarbons such as ethane, propane, butane, pentane, hexane, heptane, octane, nonane, and decane; branched aliphatic hydrocarbons such as 2-methylpropane, 2-methylbutane, 2,3,3-trimethylpentane, and 2,2,5-trimethylhexane; cycloaliphatic hydrocarbons such as cyclohexane, methylcyclohexane, and ethylcyclohexane; and paraffin oil obtained by hydrogenating and refining

petroleum fractions.

These solvents can be used alone or in combination of two or more thereof, taking into consideration the balance between the polymerization properties of the monomer constituting component D and the solubility of the resulting polymer.

The amount of the solvent used is determined in consideration of the viscosity of the resulting polymer solution and the ease of heat removal, and thus the concentration of the polymerize is 1 to 50% by weight, and preferably 5 to 35% by weight.

In actual polymerization, each component is mixed under cooling, for example, at a temperature of -100 °C or more and less than 0 °C. In order to balance energy costs and stability of polymerization, a particularly preferred temperature range is -30 °C to -80 °C.

The content of component D is 1 to 10 parts by weight, preferably 2 to 8 parts by weight, and more preferably 2 to 6 parts by weight, relative to 100 parts by weight of the component composed of component A and component B. If the content of component D is less than 1 part by weight, a sufficient effect of improving chemical resistance and suppressing abnormal noise cannot be obtained, and if it exceeds 10 parts by weight, impact resistance decreases and molded article appearance also deteriorates.

(Component E: Oxidized Polyethylene Wax)

The oxidized polyethylene wax used in the present invention is not particularly limited, and examples thereof include oxides of polyethylene wax produced by a low-pressure polymerization method, oxides of polyethylene wax produced by a high-pressure polymerization method, and oxides of high-density polyethylene polymers. These oxidized polyethylene waxes may be used alone or in combination of two or more thereof.

The dropping point of the oxidized polyethylene wax is preferably 100 °C or more and 140 °C or less, and more preferably 110 °C or more and 130 °C or less. The dropping point can be measured by a method based on ASTM D127.

The acid value of the oxidized polyethylene wax is preferably 10 mgKOH/g or more and 50 mgKOH/g or less, and more preferably 15 mgKOH/g or more and 40 mgKOH/g or less. The acid value can be measured by a method based on JIS K3504. The number average molecular weight of the oxidized polyethylene wax is preferably 500 or more and 5000 or less, and more preferably 1000 or more and 4000 or less.

The content of component E is preferably 0.05 to 1.5 parts by weight relative to 100 parts by weight of the component composed of component A and component B. By containing component E in an amount within this range, it may be possible to particularly improve mold releasability and suppress abnormal noise. The lower limit of the content of component E is more preferably 0.3 parts by weight, and further preferably 0.5 parts by weight, and the upper limit is preferably 1.3 parts by weight, and preferably 1.0 parts by weight.

(Other Components)

The resin composition of the present invention can also contain phosphorus stabilizers, hindered phenol stabilizers, release agents, UV absorbers, impact modifiers, and dyes and pigments (carbon black, titanium oxide, etc.).

(i) Phosphorus Stabilizers, Hindered Phenol Stabilizers, and Other Heat Stabilizers

It is preferable that various heat stabilizers be added to the resin composition of the present invention. As such a heat stabilizer, a phosphorus stabilizer is suitable. Examples of phosphorus stabilizers include phosphorous acid, phosphoric acid, phosphorous acid, phosphonic acid, esters thereof, and tertiary phosphine. Such phosphorus stabilizers can be used not only alone, but also in combination of two or more thereof. Examples of phosphite compounds include trialkyl phosphites such as tridecyl phosphite, dialkyl monoaryl phosphites such as didecylmonophenyl phosphite, monoalkyl diarylphosphites such as monobutyl diphenyl phosphite, triaryl phosphites such as triphenyl phosphite and tris(2,4-di-tert-butylphenyl)phosphite, pentaerythritol phosphites such as distearyl pentaerythritol diphosphite, bis(2,4-di-tert-butylphenyl) pentaerythritol diphosphite, bis(2,4-dicumylphenyl)pentaerythritol diphosphite, and bis(2,6-di-tert-butyl-4-methylphenyl)pentaerythritol diphosphite, and cyclic phosphites such as 2,2-methylenebis(4,6-di-tert-butylphenyl) octyl phosphite and 2,2'-methylenebis(4,6-di-tert-butylphenyl)(2,4-di-tert-butylphenyl)phosphite. Examples of the phosphate compound include tributyl phosphate, trimethyl phosphate, tricresyl phosphate, triphenyl phosphate, triethyl phosphate, diphenyl credyl phosphate, diphenyl monoorthoxenyl phosphate, tributoxyethyl phosphate, and diisopropyl phosphate, and triphenyl phosphate and trimethyl phosphate are preferable. Examples of the phosphonite compound include tetrakis(di-tert-butylphenyl)-biphenylene diphosphonite and bis(di-tert-butylphenyl)-phenyl-phenylphosphonite are preferable, and tetrakis(2,4-di-tert-butylphenyl)-biphenylene diphosphonite and bis(2,4-di-tert-butylphenyl)-phenyl-phenylphosphonite are more preferable. Such a phosphonite compound can be used in combination with a phosphite compound having an aryl group in which two or more alkyl groups are substituted. Examples of phosphonate compounds

include dimethyl benzenephosphonate, diethyl benzenephosphonate, and dipropyl benzenephosphonate. Examples of tertiary phosphines include triphenylphosphine.

The content of the phosphorus stabilizer is preferably 0.001 to 3.0 parts by weight, more preferably 0.01 to 2.0 parts by weight, and further preferably 0.05 to 1.0 parts by weigh relative to 100 parts by weight of the component composed of component A and component B.

Various compounds which are conventionally added to resins can be used as the hindered phenol stabilizer. Examples of such a hindered phenol stabilizer include α-tocopherol, butylated hydroxytoluene, sinapyl alcohol, vitamin E, octadecyl-3-(3,5-di-tert-butyl-4-hydroxyphenyl)propionate, 2-tert-butyl-6-(3'-tert-butyl-5'-methyl-2'-hydroxybenzyl)-4-methylphenylacrylate, 2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidene bis(3-methyl-6-tert-butylphenol), triethylene glycol-N-bis-3-(3-tert-butyl-4-hydroxy-5-methylphenyl)propionate, 1,6-hexanediol bis[3-(3,5-di-tert-butyl-4-hydroxyphenyl)propionate], bis[2-tert-butyl-4-methyl 6-(3-tert-butyl-5-methyl-2-hydroxybenzyl)phenyl] terephthalate, 3,9-bis{2-[3-(3-tert-butyl-4-hydroxy-5-methylphenyl)propionyloxy]-1,1-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl) propionate], 2,4-bis(n-octylthio)-6-(4-hydroxy-3,5-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris (3,5-di-tert-butyl-4-hydroxyphenyl) isocyanurate, tris (3,5-di-tert-butyl-4-hydroxybenzyl) isocyanurate, 1,3,5-tris(4-tert-butyl-3-hydroxy-2,6-dimethylbenzyl)isocyanurate, 1,3,5-tris 2[3(3,5-di-tert-butyl-4-hydroxyphenyl)propionyloxy]ethyl isocyanurate, tetrakis[methylene-3-(3,5-di-tert-butyl-4-hydroxyphenyl)propionate]methane, triethylene glycol-N-bis-3-(3-tert-butyl-4-hydroxy-5-methylphenyl)propionate, triethylene glycol-N-bis-3-(3-tert-butyl-4-hydroxy-5-methylphenyl) acetate, 3,9-bis[2-{3-(3-tert-butyl-4-hydroxy-5-methylphenyl)acetyloxy}-1,1-dimethylethyl]-2,4,8,10-tetraoxaspiro [5,5]undecane, tetrakis[methylene-3-(3-tert-butyl-4-hydroxy-5-methylphenyl)propionate]methane, 1,3,5-trimethyl-2,4,6-tris(3-tert-butyl-4-hydroxy-5-methylbenzyl)benzene, and tris(3-tert-butyl-4-hydroxy-5-methylbenzyl)isocyanurate. Among the above compounds, in the present invention, tetrakis[methylene-3-(3-tert-butyl-4-hydroxy-5-methylphenyl)propionate]methane, octadecyl-3-(3,5-di-tert-butyl-4-hydroxyphenyl)propionate, or 3,9-bis[2-{3-(3-t-butyl-4-hydroxy-5-methylphenyl)propionyloxy}-1,1-dimethylethyl]-2,4,8,10-tetraoxaspiro[5,5]undecane is preferably used. In particular, 3,9-bis[2-{3-(3-t-butyl-4-hydroxy-5-methylphenyl)propionyloxy}-1,1-dimethylethyl]-2,4,8,10-tetraoxaspiro [5,5]undecane is preferable. The above hindered phenolic stabilizers can be used alone or in combination of two or more thereof.

The content of the hindered phenol stabilizer is preferably 0.001 to 3.0 parts by weight, more preferably 0.01 to 2.0 parts by weight, and further preferably 0.05 to 1.0 parts by weight relative to 100 parts by weight of the component composed of component A and component B.

The resin composition of the present invention can also contain heat stabilizers other than the above-mentioned phosphorus stabilizers and hindered phenol stabilizers. Such other heat stabilizers are preferably used in combination with either of these stabilizers and antioxidants, and particularly preferably with both. Such other heat stabilizers include, for example, lactone stabilizers such as the reaction product of 3-hydroxy-5,7-di-tert-butyl-furan-2-one and o-xylene (the details of such a stabilizer are described in Japanese Unexamined Patent Publication (Kokai) No. 7-233160). Such a compound is commercially available as Irganox HP-136 (trademark, manufactured by Ciba Specialty Chemicals), and this compound can be used. Stabilizers prepared by mixing this compound with various phosphite compounds and hindered phenol compounds are commercially available. For example, Irganox HP-2921 manufactured by the above-mentioned company is preferable. Such premixed stabilizers can also be used in the present invention. The blending amount of the lactone stabilizer is preferably 0.0005 to 0.05 parts by weight, and more preferably 0.001 to 0.03 parts by weight, relative to 100 parts by weight of the component composed of component A and component B.

Examples other stabilizers include sulfur-containing stabilizers such as pentaerythritol tetrakis (3-mercaptopropionate), pentaerythritol tetrakis (3-laurylthiopropionate), and glycerol-3-stearylthiopropionate. Such stabilizers are particularly effective when the resin composition is applied in rotational molding. The blending amount of the sulfur-containing stabilizer is preferably 0.001 to 0.1 parts by weight, and more preferably 0.01 to 0.08 parts by weight, relative to 100 parts by weight of the component composed of component A and component B.

(ii) Release Agent

Release agents other than component E can be mixed into the resin composition of the present invention for the purpose of improving productivity during molding and reducing distortion of the molded article, within a range that does not

impede the effects of the present invention. Known release agents can be used as such release agents. Examples include saturated fatty acid esters, unsaturated fatty acid esters, silicone compounds, fluorine compounds (fluorine oils represented by polyfluoroalkyl ethers, etc.), paraffin wax, and beeswax. Among them, fatty acid esters are preferable as release agents. Such fatty acid esters are esters of aliphatic alcohols and aliphatic carboxylic acids. Such aliphatic alcohol may be a monohydric alcohol or a polyhydric alcohol having a dihydrity or more. Further, the carbon number of the alcohol is in the range of 3 to 32, more preferably in the range of 5 to 30. Examples of such monohydric alcohols include dodecanol, tetradecanol, hexadecanol, octadecanol, eicosanol, tetracosanol, ceryl alcohol, and triacontanol. Examples of such polyhydric alcohols include pentaerythritol, dipentaerythritol, tripentaerythritol, polyglycerol (triglycerol to hexaglycerol), ditrimethylolpropane, xylitol, sorbitol, and mannitol. Among the fatty acid esters of the present invention, polyhydric alcohols are more preferable. The aliphatic carboxylic acid preferably has 3 to 32 carbon atoms, and particularly preferably has 10 to 22 carbon atoms. Examples of the aliphatic carboxylic acids include saturated aliphatic carboxylic acids such as decanoic acid, undecanoic acid, dodecanoic acid, tridecanoic acid, tetradecanoic acid, pentadecanoic acid, hexadecanoic acid (palmitic acid), heptadecanoic acid, octadecanoic acid (stearic acid), nonadecanoic acid, behenic acid, icosanoic acid, and docosanoic acid, as well as unsaturated aliphatic carboxylic acids such as palmitoleic acid, oleic acid, linoleic acid, linolenic acid, eicosenoic acid, eicosapentaenoic acid, and cetoleic acid. Among the above aliphatic carboxylic acids, those having 14 to 20 carbon atoms are preferable. Among these, saturated aliphatic carboxylic acids are preferable. Stearic acid and palmitic acid are particularly preferable. Since the above-described aliphatic carboxylic acids such as stearic acid and palmitic acid are conventionally produced from natural fats and oils such as animal fats and lipids such as beef tallow and lard, and vegetable oils and fats such as palm oil and sunflower oil, these aliphatic carboxylic acids are conventionally mixtures containing other carboxylic acid components with different numbers of carbon atoms. Thus, in the production of the fatty acid ester of the present invention, aliphatic carboxylic acids produced from such natural fats and oils and in the form of a mixture containing other carboxylic acid components, particularly stearic acid and palmitic acid, are preferably used. The fatty acid ester may be either a partial ester or a total ester (full ester). However, since partial esters conventionally have a high hydroxyl value and tend to cause decomposition of resin at high temperatures, full esters are more preferable. The acid value of the fatty acid ester of the present invention is preferably 20 or less, more preferably in the range of 4 to 20, and further preferably in the range of 4 to 12, from the viewpoint of thermal stability. It should be noted that the acid value can be substantially zero. Further, the hydroxyl value of the fatty acid ester is more preferably in the range of 0.1 to 30. The iodine value is preferably 10 or less, and the iodine value can be substantially zero. These characteristics can be determined by the method specified in JIS K0070.

The content of the release agent is preferably 0.01 to 4.0 parts by weight, more preferably 0.05 to 3.0 parts by weight, and further preferably 0.1 to 2.5 parts by weight relative to 100 parts by weight of the component composed of component A and component B.

(iii) UV Absorber

The resin composition of the present invention can contain a UV absorber. Examples of benzophenone-based UV absorbers include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydride dolate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybensophenone, and 2-hydroxy-4-methoxy-2'-carboxybenzophenone. Examples of benzotriazole-based UV absorbers include 2-(2-hydroxy-5-methylphenyl) benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolphenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole, as well as polymers containing a 2-hydroxyphenyl-2H-benzotriazole skeleton such as copolymers of 2-(2'-hydroxy-5-methacryloxyethylphenyl)-2H-benzotriazole and a vinyl monomer which can be copolymerized with the monomer and copolymers of 2-(2'-hydroxy-5-acryloxyethylphenyl)-2H-benzotriazole and a vinyl monomer which can be copolymerized with the monomer. Examples of hydroxyphenyltriazine-based UV absorbers include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol, and 2-(4,6-diphenyl-1,3,5-triazin-2-yl)-5-butyloxyphenol. The phenyl group of the exemplified compounds described above, such as 2-(4,6-bis(2,4-dimethylphenyl)-1,3,5-triazin-2-yl)-5-hexyloxyphenol, is a compound which becomes a 2,4-dimethylphenyl group. Examples of cyclic iminoester-based UV absorbers include 2,2'-p-phenylenebis(3,1-benzoxazin-4-one), 2,2'-(4,4'-diphenylene)bis(3,1-benzoxazin-4-one), and 2,2'-(2,6-naphthalene)bis(3,1-benzoxazin-4-one).

Examples of cyanoacrylate-based UV absorbers include 1,3-bis-[(2'-cyano-3',3'-diphenylacryloyl)oxy]-2,2-bis [(2-cyano-3,3-diphenylacryloyl)oxy]methyl)propane, and 1,3-bis-[(2-cyano-3,3-diphenylacryloyl)oxy]benzene.

Further, the above UV absorber may be a polymer UV absorber in which such a UV-absorbing monomer and/or a photostable monomer having a hindered amine structure is copolymerized with a monomer such as an alkyl (meth) acrylate by adopting the structure of a monomer compound that can be radically polymerized. Preferred examples of the ultraviolet absorbing monomer include compounds containing a benzotriazole skeleton, a benzophenone skeleton, a triazine skeleton, a cyclic iminoester skeleton, and a cyanoacrylate skeleton in the ester substituent of a (meth)acrylic ester.

The content of the UV absorber is preferably 0.01 to 2.0 parts by weight, more preferably 0.02 to 1.5 parts by weight, and further preferably 0.03 to 1.0 parts by weight relative to 100 parts by weight of the component composed of component A and component B.

(iv) Other Resins/Elastomers

In the resin composition of the present invention, other resins or elastomers can also be used in small proportions within the range which brings about the effects of the present invention. Examples of such other resins include resins such as polypropylene resins, polyethylene terephthalate resins, polybutylene terephthalate resins, polyamide resins, polyimide resins, polyetherimide resins, polyurethane resins, silicone resins, polyphenylene ether resins, polyphenylene sulfide resins, polysulfone resins, polymethacrylate resins, phenol resins, and fluorine resins. Furthermore, examples of elastomers include isobutylene/isoprene rubber, styrene/butadiene rubber, ethylene/propylene rubber, acrylic elastomers, polyester elastomers, polyamide elastomers, MBS (methyl methacrylate/styrene/butadiene) rubber, which is a core-shell type elastomer, MB (methyl methacrylate/butadiene) rubber, and MAS (methyl methacrylate/acrylonitrile/styrene) rubber.

(v) Dyes and Pigments

The resin composition of the present invention can further provide molded articles containing various dyes and pigments and exhibiting various designs. By incorporating a fluorescent whitening agent or other fluorescent dyes which emit light, it is possible to provide even better design effects which take advantage of the emitted light color. It is also possible to provide a resin composition which is colored with a trace amount of dye and pigment and has vivid color development.

Examples of the fluorescent dye (including fluorescent whitening agents) which can be used in the present invention include coumarin-based fluorescent dyes, benzopyran-based fluorescent dyes, perylene-based fluorescent dyes, anthraquinone-based fluorescent dyes, thioindigo-based fluorescent dyes, xanthene-based fluorescent dyes, xanthone-based fluorescent dyes, thioxanthene-based fluorescent dyes, thioxanthone-based fluorescent dyes, thiazine-based fluorescent dyes, and diaminostilbene-based fluorescent dyes. Among these, coumarin-based fluorescent dyes, benzopyran-based fluorescent dyes, and perylene-based fluorescent dyes are preferable because they have good heat resistance and are less likely to deteriorate during molding of the polycarbonate resin.

Examples of dyes other than the above bluing agents and fluorescent dyes include perylene-based dyes, coumarin-based dyes, thioindigo-based dyes, anthraquinone-based dyes, thioxanthone-based dyes, ferrocyanides such as navy blue, perinone-based dyes, quinoline-based dyes, quinacridone-based dyes, dioxazine-based dyes, isoindolinone-based dyes, and phthalocyanine-based dyes. The resin composition of the present invention can be blended with a metallic pigment to obtain a better metallic color. As the metallic pigment, those having a metal coating or a metal oxide coating on various plate-shaped fillers are suitable.

The content of the dye and pigment described above is preferably 0.00001 to 1 part by weight, and more preferably 0.00005 to 0.5 parts by weight, relative to 100 parts by weight of the component composed of component A and component B.

(vi) Flame Retardant

Various compounds conventionally known as flame retardants for thermoplastic resins, and in particular, polycarbonate resins, can be applied to the resin composition of the present invention, more preferably, (i) halogen-based flame retardants (for example, brominated polycarbonate compounds, etc.), (ii) phosphorus-based flame retardants (for example, monophosphate compounds, phosphate oligomer compounds, phosphonate oligomer compounds, phosphonitrile oligomer compounds, phosphonic acid amide compounds, and phosphazene compounds), (iii) metal salt flame retardants (for example, organic sulfonic acid alkali (earth) metal salts, boric acid metal salt flame retardants, and stannate metal salt flame retardants), and (iv) silicone flame retardants composed of silicone compounds. The blending of the compound used as the flame retardant not only improves flame retardancy, but also improves antistatic properties,

fluidity, rigidity, and thermal stability based on the properties of each compound.

The content of the flame retardant is preferably 0.01 to 30 parts by weight, more preferably 0.05 to 28 parts by weight, and further preferably 0.08 to 25 parts by weight relative to 100 parts by weight of the component composed of component A and component B. When the content of the flame retardant is less than 0.01 parts by weight, sufficient flame retardancy may not be obtained, and when it exceeds 30 parts by weight, the mechanical properties may be significantly reduced.

(vii) White Pigment for High Light Reflection

The resin composition of the present invention can be blended with a white pigment for high light reflection to impart a light reflection effect. Examples of such white pigments include zinc sulfide, zinc oxide, barium sulfate, calcium carbonate, and calcined kaolin. The content of such a white pigment for high light reflection is preferably 1 to 30 parts by weight, and more preferably 3 to 25 parts by weight, relative to 100 parts by weight of the component composed of component A and component B. It should be noted that two or more types of white pigments for high light reflection can be used in combination.

(viii) Other Additives

The resin composition of the present invention may contain a small proportion of known additives in order to impart various functions to the molded article or improve the properties thereof. These additives may be added in conventional amounts as long as they do not impair the purpose of the present invention. Examples of such additives include sliding agents (for example, PTFE particles), coloring agents (for example, pigments such as carbon black and dyes), light diffusing agents (for example, acrylic crosslinked particles, silicone crosslinked particles, ultrathin glass flakes, and calcium carbonate particles), fluorescent dyes, inorganic phosphors (for example, phosphors with aluminate as a host crystal), antistatic agents, crystal nucleating agents, inorganic and organic antibacterial agents, photocatalytic antifouling agents (for example, particulate titanium oxide, particulate zinc oxide), radical generators, infrared absorbers (heat ray absorbers), and photochromic agents.

(Resin Composition Preparation Method)

The resin composition of the present invention is prepared by mixing the above components simultaneously or in any order using a mixer such as a tumbler, V-type blender, Nauta mixer, Banbury mixer, kneading roll, or extruder. The mixer is preferably melt-kneaded using a twin-screw extruder, and if necessary, it is preferable to feed any component into other melt-mixed components from the second supply port using a side feeder or the like. The resin extruded as described above is either directly cut into pellets, or formed into strands and then cut with a pelletizer to form pellets. If it is necessary to reduce the influence of external dust during pelletization, it is preferable to clean the atmosphere around the extruder. The shape of the obtained pellets may be a general shape such as a cylinder, a prism, or a sphere, but the shape of the pellets is more preferably a cylinder. The diameter of such a cylinder is preferably 1 to 5 mm, more preferably 1.5 to 4 mm, and further preferably 2 to 3.5 mm. The length of the cylinder is preferably 1 to 30 mm, more preferably 2 to 5 mm, and further preferably 2.5 to 4 mm.

(Molded Article Composed of Resin Composition Obtained by Production Method of Present Invention)

The resin composition obtained by the production method of the present invention can be used to produce various products by injection molding the pellets obtained by the above-described method. In such injection molding, in addition to conventional molding methods, a molded article can be obtained using an injection molding method such as injection compression molding, injection press molding, gas-assisted injection molding, foam molding (including injection of supercritical fluid), insert molding, in-mold coating molding, thermal insulation molding, rapid heating and cooling molding, two-color molding, sandwich molding, and ultra-high speed injection molding depending on the purpose. The advantages of these various molding methods are already widely known. Further, for molding, either a cold runner method or a hot runner method can be selected.

EXAMPLES

The present invention will be explained in more detail with reference to the Examples below. Further, hereinafter, "part" means "parts by weight" and "%" means "% by weight" unless otherwise specified.

(1) Preparation of Resin Composition

(1-1) Raw Materials Used

(Component A)

A-1: Polycarbonate resin powder having a molecular weight of 19,800 obtained by the following production method
A three-stage, six-blade stirrer and a reflux condenser were attached to a baffled reaction vessel. Into this reaction vessel were placed 45.6 parts of bisphenol A, 2.78 mol% of p-tert-butylphenol based on bisphenol A, 265 parts of dichloromethane, and 200 parts of water, and a nitrogen purge was performed to remove the oxygen in the reaction vessel. It should be noted that at this stage, the content in the reaction vessel was slightly less than 80% of the capacity of the vessel. Next, approximately 80 parts of an aqueous solution containing 0.09 parts of sodium hydrosulfite and 21.8 parts of sodium hydroxide was supplied to the suspension, and the bisphenol A was dissolved at 15 °C. 23.35 parts of phosgene were fed to this mixture over 30 minutes while stirring. Thereafter, 0.016 part of triethylamine (0.08 mol% based on bisphenol A) was added and stirred for 60 minutes to terminate the reaction. Thereafter, the reaction mixture was allowed to stand, and the organic phase was separated. Methylene chloride was added to the dichloromethane solution of the obtained polycarbonate resin to obtain a solution having a concentration of 14% by weight, and a centrifugal extractor with a perforated plate (KCC centrifugal extractor manufactured by Kawasaki Engineering Co., Ltd.) was used to feed thereto a 0.5% sodium hydroxide aqueous solution at a flow rate of 1,000 ml/min and the organic phase at a flow rate of 1,000 ml/min. After treatment at 3,500 rpm, the organic phase was made acidic with hydrochloric acid, and then water washing was repeated to remove the aqueous phase. When the conductivity became almost the same as that of ion-exchanged water, the methylene chloride was evaporated to obtain polycarbonate resin powder.

(Component B)

B-1: ABS resin (MAGNUM A156 manufactured by Triseo Holdings Asia, Pte. Ltd.)

(Component C)

C-1: Graft copolymer having a side chain which is a vinyl copolymer containing acrylonitrile and styrene and having a main chain which is an ethylene-vinyl acetate copolymer (Modiper AS100 manufactured by NOF Corporation)

(Component D)

D-1: Styrene-isobutylene-styrene block copolymer (SIBSTAR103T manufactured by Kaneka Corporation)
D-2 (Comparative Example): Styrene ethylene propylene-styrene block copolymer (Septon 2104 manufactured by Kuraray Co., Ltd.)
D-3 (Comparative Example): Graft copolymer with a core-shell structure in which the core is butadiene rubber and the shell is methyl methacrylate and styrene (Kane Ace M-701 manufactured by Kaneka Corporation)

(Component E)

E-1: Oxidized polyethylene wax (Highwax 310MP manufactured by Mitsui Chemicals, Inc.)

(Other Components)

F-1: Release agent (fatty acid ester Rikester EW-400 manufactured by Riken Vitamin Co., Ltd.)
F-2: Phosphorus stabilizer (Adekastab 2112 manufactured by ADEKA Co., Ltd.)
F-3: Hindered phenol stabilizer (Adekastab AO-50 manufactured by ADEKA Co., Ltd. )
F-4: Carbon black (Royal Black RB90003 S (product name) manufactured by Koshigaya Kasei Co., Ltd.)

(1-2) Preparation of Resin Composition

The components listed in Table 1 were mixed in the proportions listed, and the mixture was fed from the first feed port of the extruder. Such a mixture was obtained by mixing in a V-type blender. For extrusion, a vented twin-screw extruder

(TEX30 α-38.5BW-3V manufactured by Japan Steel Works, Ltd.) having a diameter of 30 mm was used for melt-kneading at a screw rotation speed of 230 rpm, a discharge rate of 25 kg/h, and a vent vacuum of 3 kPa to obtain pellets. It should be noted that the extrusion temperature from the first supply port to the die portion was 260 °C.

(2) Test Sample Preparation

(2-1) Method for Preparation of Samples for Charpy Impact Strength Measurement

After drying the obtained pellets at 110 °C for 6 hours in a hot air circulation dryer, an ISO bending test sample was molded by injection molding machine (EC130XII-4Y manufactured by Toshiba Machine Co., Ltd.) under conditions of a cylinder temperature of 260 °C and a mold temperature of 70 °C.

(2-2) Method for Preparation of Samples for Molded Article Appearance and Chemical Resistance Evaluation

After drying the obtained pellets at 110 °C for 6 hours in a hot air circulation dryer, a plate having a 100 mm width × 100 mm length × 2 mm thickness was molded by injection molding machine (EC130XII-4Y manufactured by Toshiba Machine Co., Ltd.) under conditions of a cylinder temperature of 260 °C and a mold temperature of 70 °C.

(2-3) Method for Preparation of Samples for Abnormal Noise Evaluation

After drying the obtained pellets at 110 °C for 6 hours in a hot air circulation dryer, a plate having a 100 mm width × 100 mm length × 1 mm thickness was molded by injection molding machine (EC130XII-4Y manufactured by Toshiba Machine Co., Ltd.) under conditions of a cylinder temperature of 260 °C and a mold temperature of 70 °C.

(3) Evaluation Items

(3-1) Charpy Impact Strength

Using the ISO bending test sample obtained by the above method, the notched Charpy Impact Strength was measured in accordance with ISO 179 in an atmosphere of a temperature of 23°C and a relative humidity of 50% RH. It is necessary that the resin composition of the present invention have a Charpy impact strength of 40 $kJ/m^2$ or more.

(3-2) Molded Article Appearance

The appearance of a plate having a 100 mm width × length 100 mm × 2 mm thickness obtained by the above method was visually evaluated. It should be noted that the evaluation was performed based on the following criteria.

Excellent: No appearance defects
Poor: Molded article with poor appearance such as whitening or silvering

(3-3) Chemical Resistance

Using a plate having a 100 mm width × 100 mm length × 2 mm thickness obtained by the above method, 0.5g of an automotive deodorizer/air freshener [Febreze Premium Clip Aqua Waltz (manufactured by P&G Japan LLC)] was applied to the center of the molded article, and after spreading it evenly over the entire surface with fingers, it was maintained in a constant temperature bath at 80 °C for 4 hours. Thereafter, the molded article was removed from the constant temperature bath, washed with water, and the appearance of the molded article was visually evaluated. It should be noted that the evaluation was performed based on the following criteria.

Excellent: No whitening was observed in the area where the chemical was applied
Poor: Whitening was observed in the area where the chemical was applied

(3-4) Abnormal Noise

Abnormal noise evaluation was performed using a reciprocating friction and wear tester AFT-15M manufactured by Orientech Co., Ltd. A sample measuring 20 mm width × 20 mm length × 1 mm thickness was cut from a 100 mm width × 100 mm length × 1 mm thickness plate obtained by the method described above, the cut sample was applied perpendicularly to a plate having a 100 mm width × 100 mm length × 1 mm thickness, which was the counterpart

material obtained by the above method, and evaluation was performed using the following criteria by rubbing under two conditions: a load of 5 N and a speed of 0.5 mm/s and a load of 10 N and a speed of 0.5 mm/s. It is necessary that the resin composition of the present invention be "Excellent" under the conditions of a load of 5 N and a speed of 0.5 mm/s.

Excellent: No abnormal noise could be heard during the test (when no sound of 80 dB or more occurred)
Poor: Abnormal noise could be heard during the test (when sound of 80 dB or more occurred)

(3-5) Heat Resistance

Using an ISO bending sample obtained by the method described above, in accordance with ISO 75-1.2, the load deflection temperature (HDT) was measured using an HDT/VICAT tester [Heat Distortion Tester 6M-2 manufactured by Toyo Seiki Seisakusho Co., Ltd.] under a load of 1.8 MPa.

(3-6) Fluidity

The obtained pellets were dried at 110 °C for 6 hours in a hot air circulation dryer, and then the melt volume rate (MVR) was measured using a semi-automatic melt indexer [Semi-automatic melt indexer 2A manufactured by Toyo Seiki Seisakusho Co., Ltd.] at a temperature of 250 °C and a weight of 5000 g.

[Table 1]

| Item | | | Unit | Example | | | | | | | | | | | Comparative Example | | | | | | | |
|---|---|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 1 | 2 | 3 | 4 | 5 | 6 | 7 | 8 |
| Comp | Component A | A-1 | parts by weight | 90 | 45 | 72 | 72 | 72 | 72 | 72 | 72 | 72 | 72 | 72 | 72 | 72 | 72 | 72 | 72 | 72 | 95 | 40 |
| | Component B | B-1 | " | 10 | 55 | 28 | 28 | 28 | 28 | 28 | 28 | 28 | 28 | 28 | 28 | 28 | 28 | 28 | 28 | 28 | 5 | 60 |
| | Component A + Component B | | " | 100 | 100 | 100 | 100 | 100 | 100 | 100 | 100 | 100 | 100 | 100 | 100 | 100 | 100 | 100 | 100 | 100 | 100 | 100 |
| | Component C | C-1 | " | 3 | 3 | 3 | 3 | 3 | 1 | 5 | 10 | 3 | 3 | 3 | 3 | 3 | | 12 | 3 | 3 | 3 | 3 |
| | Component D | D-1 | " | 3 | 3 | 3 | 3 | 3 | 3 | 3 | 3 | 1 | 5 | 10 | | | 3 | 3 | | 12 | 3 | 3 |
| | | D-2 | " | | | | | | | | | | | | 3 | | | | | | | |
| | | D-3 | " | | | | | | | | | | | | | 3 | | | | | | |
| | Component E | E-1 | " | 1 | 1 | 1 | | 1 | 1 | 1 | 1 | 1 | 1 | 1 | 1 | 1 | 1 | 1 | 1 | 1 | 1 | 1 |
| | Other Components | F-1 | " | | | | 1 | | | | | | | | | | | | | | | |
| | | F-2 | " | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| | | F-3 | " | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| | | F-4 | " | 0.80 | 0.80 | 0.80 | 0.80 | | 0.80 | 0.80 | 0.80 | 0.80 | 0.80 | 0.80 | 0.80 | 0.80 | 0.80 | 0.80 | 0.80 | 0.80 | 0.80 | 0.80 |
| Eval Results | Charpy impact strength | | $kJ/m^2$ | 84 | 48 | 73 | 71 | 72 | 76 | 61 | 48 | 74 | 67 | 51 | 74 | 82 | 80 | 37 | 79 | 38 | 88 | 36 |
| | Molded product appearance | | - | Exc | Exc | Exc | Exc | Exc | Exc | Exc | Exc | Exc | Exc | Exc | Exc | Exc | Exc | Poor | Exc | Poor | Exc | Exc |
| | Chemical resistance | | - | Exc | Exc | Exc | Exc | Exc | Exc | Exc | Exc | Exc | Exc | Exc | Poor | Poor | Poor | Exc | Poor | Exc | Exc | Exc |
| | Abnormal noise - 5N load | | - | Exc | Exc | Exc | Exc | Exc | Exc | Exc | Exc | Exc | Exc | Exc | Poor | Poor | Poor | Exc | Poor | Exc | Exc | Exc |
| | Abnormal noise - 10N load | | - | Exc | Exc | Exc | Poor | Exc | Exc | Exc | Exc | Exc | Exc | Exc | Poor | Poor | Poor | Exc | Poor | Exc | Exc | Exc |
| | Heat resistance (HDT) | | °C | 121 | 90 | 106 | 106 | 106 | 106 | 106 | 106 | 106 | 106 | 107 | 105 | 106 | 106 | 106 | 106 | 106 | 124 | 86 |
| | Fluidity (MVR) | | $cm^3/10$ min | 11 | 22 | 16 | 16 | 16 | 17 | 15 | 15 | 16 | 16 | 15 | 15 | 16 | 17 | 15 | 16 | 15 | 7 | 24 |

## Claims

**1.** A resin composition containing,

100 parts by weight of a component composed of (A) 45 to 90 parts by weight of polycarbonate resin (component A) and (B) 10 to 55 parts by weight of a copolymer (component B) obtained by polymerizing an aromatic vinyl monomer, a vinyl cyanide monomer, and a diene-based rubber polymer,
(C) 1 to 10 parts by weight of a graft copolymer (component C) having a side chain which is a copolymer obtained by polymerizing an aromatic vinyl monomer and another vinyl monomer, and having a main chain which is an ethylene-vinyl acetate copolymer, and
(D) 1 to 10 parts by weight of an isobutylene-based block copolymer (component D) obtained by polymerizing a monomer containing isobutylene as a primary component and a monomer not containing isobutylene as a

primary component.

2. The resin composition according to claim 1, further containing, relative to 100 parts by weight of the component composed of component A and component B, (E) 0.05 to 1.5 parts by weight of an oxidized polyethylene wax (component E).

3. The resin composition according to claim 1 or 2, wherein component B is an ABS resin.

4. The resin composition according to any one of claims 1 to 3, wherein component D is a styrene-isobutylene-styrene block copolymer.

5. A molded article composed of the resin composition according to any one of claims 1 to 4.

6. The molded article according to claim 5, wherein the molded article is an automotive part.

## Patentansprüche

1. Harzzusammensetzung, enthaltend,

   100 Gewichtsteile einer Komponente, bestehend aus (A) 45 bis 90 Gewichtsteilen Polycarbonatharz (Komponente A) und (B) 10 bis 55 Gewichtsteilen eines Copolymers (Komponente B), das durch Polymerisation eines aromatischen Vinylmonomers, eines Vinylcyanidmonomers und eines Kautschukpolymers auf Dienbasis erhalten wird,
   (C) 1 bis 10 Gewichtsteile eines Pfropfcopolymers (Komponente C) mit einer Seitenkette, die ein durch Polymerisation eines aromatischen Vinylmonomers und eines weiteren Vinylmonomers erhaltenes Copolymer ist, und mit einer Hauptkette, die ein Ethylen-Vinylacetat-Copolymer ist, und
   (D) 1 bis 10 Gewichtsteile eines Blockcopolymers auf Isobutylenbasis (Komponente D), das durch Polymerisation eines Monomers, das Isobutylen als Hauptkomponente enthält, und eines Monomers, das kein Isobutylen als Hauptkomponente enthält, erhalten wird.

2. Harzzusammensetzung nach Anspruch 1, die, bezogen auf 100 Gewichtsteile der aus Komponente A und Komponente B bestehenden Komponente, ferner (E) 0,05 bis 1,5 Gewichtsteile eines oxidierten Polyethylenwachses (Komponente E) enthält.

3. Harzzusammensetzung nach Anspruch 1 oder 2, wobei Komponente B ein ABS-Harz ist.

4. Harzzusammensetzung nach einem der Ansprüche 1 bis 3, wobei Komponente D ein Styrol-Isobutylen-Styrol-Blockcopolymer ist.

5. Formteil, das aus der Harzzusammensetzung nach einem der Ansprüche 1 bis 4 besteht.

6. Formteil nach Anspruch 5, wobei das Formteil ein Automobilteil ist.

## Revendications

1. Composition de résine contenant,

   100 parties en poids d'un composant constitué de (A) 45 à 90 parties en poids de résine de polycarbonate (composant A) et de (B) 10 à 55 parties en poids d'un copolymère (composant B) obtenu par polymérisation d'un monomère vinylique aromatique, d'un monomère de cyanure de vinyle et d'un polymère de caoutchouc à base de diène,
   (C) 1 à 10 parties en poids d'un copolymère greffé (composant C) ayant une chaîne latérale qui est un copolymère obtenu par polymérisation d'un monomère vinylique aromatique et d'un autre monomère vinylique, et ayant une chaîne principale qui est un copolymère d'éthylène-acétate de vinyle, et
   (D) 1 à 10 parties en poids d'un copolymère séquencé à base d'isobutylène (composant D) obtenu par polymérisation d'un monomère contenant de l'isobutylène comme composant principal et d'un monomère ne

contenant pas d'isobutylène comme composant principal.

2. Composition de résine selon la revendication 1, contenant en outre, par rapport à 100 parties en poids du composant constitué du composant A et du composant B, (E) 0,05 à 1,5 partie en poids d'une cire de polyéthylène oxydée (composant E).

3. Composition de résine selon la revendication 1 ou 2, dans laquelle le composant B est une résine ABS.

4. Composition de résine selon l'une quelconque des revendications 1 à 3, dans laquelle le composant D est un copolymère séquencé styrène-isobutylène-styrène.

5. Article moulé composé de la composition de résine selon l'une quelconque des revendications 1 à 4.

6. Article moulé selon la revendication 5, dans lequel l'article moulé est une pièce automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63056267 B, Kokoku
- JP 2798396 B
- JP 5247236 A, Kokai
- JP 2018141078 A
- JP 6172508 A, Kokai
- JP 8027370 A, Kokai
- JP 2001055435 A, Kokai
- JP 2002117580 A, Kokai
- JP 5306336 A, Kokai
- JP 7233160 A, Kokai